# FASCICULE DE BREVET EUROPEEN

(11) **EP 3 371 549 B1**
(45) Date de publication et mention de la délivrance du brevet: **01.04.2020**
(21) Numéro de dépôt: 16800893.6
(22) Date de dépôt: 02.11.2016
(51) Int. Cl.: G01B 11/245

(54) **DISPOSITIF DE CONTRÔLE TRIDIMENSIONNEL SANS CONTACT D'UNE PIÈCE MÉCANIQUE À DENTURE**
VORRICHTUNG ZUR BERÜHRUNGSLOSEN DREIDIMENSIONALEN INSPEKTION EINER VERZAHNTEN MECHANISCHEN KOMPONENTE
DEVICE FOR THE CONTACTLESS THREE-DIMENSIONAL INSPECTION OF A TOOTHED MECHANICAL COMPONENT

(30) Priorité: 02.11.2015 FR 1560485
(43) Date de publication de la demande: 12.09.2018
(73) Titulaire: Mesure-Systems3D, 35170 Bruz (FR)
(72) Inventeur: LE NEEL, Didier, 35770 Vern Sur Seiche (FR)
(74) Mandataire: Vidon Brevets & Stratégie
(86) Numéro de dépôt international: PCT/EP2016/076337
(87) Numéro de publication internationale: WO 2017/076854

(56) Documents cités:
- DE-A1- 4 142 676
- DE-A1-102010 021 421
- US-A- 4 547 674

## Description

### 1. DOMAINE DE L'INVENTION

Le domaine de l'invention est celui de la mesure dimensionnelle de pièces mécaniques à denture.

L'invention concerne plus particulièrement un dispositif de contrôle tridimensionnel sans contact d'une pièce mécanique à denture, telle qu'une roue dentée, un pignon denté ou un arbre denté par exemple.

Dans la suite de la description, le terme « pièce mécanique dentée » est utilisé pour couvrir toutes les pièces pouvant faire partie d'un engrenage ou système d'engrenage, d'une transmission par pignon, par crémaillère ou similaire. On entend par denture la partie dentée de la pièce mécanique concernée.

### 2. ARRIÈRE-PLAN TECHNOLOGIQUE

Les pièces mécaniques à denture qui composent généralement un système d'engrenage sont largement utilisées dans les banches de la mécanique pour transmettre des mouvements, telles que l'aéronautique, l'automobile, l'horlogerie par exemple. Ces pièces mécaniques doivent être réalisées avec une très grande précision dans ses dimensions ou sa forme, et de qualité convenable et constante.

Il convient donc de prévoir un contrôle dimensionnel de chacune de ces pièces afin de savoir si elles respectent bien les tolérances de fabrication requises. Un tel contrôle est généralement effectué sur la chaine de fabrication et implique un certain nombre de caractéristiques dimensionnelles, à savoir: la forme et/ou la dimension des dentures, le pas entre chaque denture, l'orientation des dentures par rapport à l'axe principal de la pièce, etc.

Une solution classique consiste à contrôler ces pièces en sortie de fabrication soit manuellement soit en utilisant des machines de contrôle dimensionnel automatisé, telles que les machines de palpation mécanique. Ces dernières permettent d'acquérir les dimensions et la forme d'une pièce, puis de les contrôler.

Toutefois, l'inspection visuelle des pièces ne répond ni aux cadences de production élevées, ni aux exigences de qualité de certains domaines industriels, l'aéronautique et l'automobile notamment, certains défauts restant difficilement repérables à l'œil nu.

Les solutions de palpage mécanique par ailleurs requièrent un processus de contrôle discontinu, qui nécessite un temps de contrôle relativement long. De plus, les pièces à denture présentent généralement une forme complexe (les dentures peuvent présentées une forme et une inclinaison par rapport à l'axe de la pièce particulières par exemple) nécessitant l'utilisation de machines distinctes pour permettre un contrôle de l'intégralité des caractéristiques dimensionnelles de ces pièces, ce qui n'est pas optimal. De plus les systèmes de contrôle sans contact actuels ne permettent pas d'atteindre les précisions et les cadences imposées par l'industrie manufacturière.

Il serait donc souhaitable de proposer une machine de contrôle automatique capable de contrôler de façon précise, reproductible et rapide toutes les caractéristiques dimensionnelles de pièces mécaniques à denture.

DE 10 2010 021 421 A1 décrit un dispositif de contrôle tridimensionnel optique d'une pièce mécanique circulaire à denture et DE 41 42 676 A1 décrit un dispositif de mesure optique des deux faces de chaque dent d'une pièce mécanique circulaire à denture.

### 3. OBJECTIFS DE L'INVENTION

L'invention, dans au moins un mode de réalisation, a notamment pour objectif de pallier les différents inconvénients de ces techniques de l'art antérieurs de mesure et de contrôle dimensionnel.

Plus précisément, dans au moins un mode de réalisation de l'invention, un objectif est de fournir un dispositif de contrôle qui permette un contrôle tridimensionnel automatique, complet, rapide et sans contact d'une pièce mécanique à denture.

### 4. EXPOSÉ DE L'INVENTION

Dans un mode de réalisation particulier de l'invention, il est proposé selon la revendication 1 un dispositif de contrôle tridimensionnel sans contact d'une pièce mécanique circulaire à denture ayant un axe principal de rotation, les dents de ladite denture ayant une épaisseur et une profondeur définies, chaque dent possédant une première et deuxième faces. Ledit dispositif est tel qu'il comprend:
- des moyens de balayage de chacune desdites dents, lesdits moyens de balayage comprenant au moins un premier couple de modules de mesure laser et des moyens d'entrainement en rotation autour de l'axe principal de ladite pièce par rapport aux modules de mesure laser ou inversement;
- au moins un module de mesure laser additionnel configuré pour mesurer l'axe principal de rotation de ladite pièce;
- des moyens de construction d'une représentation tridimensionnelle virtuelle de ladite pièce à partir de données provenant desdits moyens de balayage ;
- des moyens de contrôle dimensionnel à partir de ladite représentation tridimensionnelle virtuelle reconstruite ;
- chaque couple de modules de mesure laser comprenant un premier module orienté vers une première face d'une dent et un deuxième module orienté vers une deuxième face d'une dent ;
   lesdits modules de mesure laser étant orientés par rapport à ladite pièce de façon à ce qu'au cours d'une rotation desdits modules ou de ladite pièce autour de l'axe principal, lesdits moyens de balayage balayent lesdites première et deuxième faces de chaque dent sur toute leur épaisseur et profondeur.

Ainsi, grâce à un agencement astucieux d'au moins un couple de modules de mesure laser, le dispositif de contrôle tridimensionnel selon l'invention permet de réaliser de manière automatique et sans contact un balayage complet et précis de la denture de la pièce mécanique à contrôler. Un contrôle de l'intégralité des caractéristiques dimensionnelles de la pièce peut alors être effectué à partir des points de mesure issus des moyens de balayage.

Contrairement aux solutions existantes, le dispositif selon l'invention permet de déterminer un nuage de points de mesure de la pièce en trois dimensions et en quelques secondes sur l'ensemble de sa surface. En fonction de la technologie laser embarquée dans les modules de mesure et du procédé de construction de représentation tridimensionnelle et de contrôle associé, il est possible de réaliser un contrôle de pièce ultra-rapide (durée comprise approximativement entre 1 et 5 secondes).

Selon une caractéristique particulière, chaque module de mesure laser comprend une source d'émission d'un faisceau laser orienté par rapport à l'axe principal de rotation et par rapport à un axe radial de ladite pièce, et un récepteur de faisceau laser orienté pour capter le faisceau laser provenant de ladite pièce.

Une des conditions sur l'orientation de modules est que l'axe d'orientation du faisceau laser des modules peut être incliné par rapport à l'axe radial et l'axe principal de rotation, mais ne doit pas être orthogonal avec l'axe principal de rotation.

Selon un aspect particulier de l'invention, le faisceau laser est orienté par rapport à l'axe principal de rotation d'un premier angle compris entre 10 et 45 degrés et par rapport à l'axe radial d'un deuxième angle compris entre 10 et 45 degrés.

Selon une caractéristique particulière, lesdits moyens de balayage comprennent des moyens d'entrainement en translation de la pièce mécanique le long de l'axe principal par rapport aux modules de mesure laser ou inversement.

Ainsi, dans les cas où une pièce mécanique, telle qu'une roue dentée, présenterait une denture d'épaisseur telle que la taille du faisceau laser des moyens de balayage ne permette qu'un balayage partiel de l'épaisseur de la denture, un mouvement de translation de la pièce par rapport aux modules de mesure ou inversement le long de l'axe principal peut être réalisé pour assurer un balayage complet sur toute l'épaisseur de la denture.

Le dispositif dans cette configuration peut donc prévoir un mouvement simultané ou séquentiel en rotation et en translation de la pièce par rapport aux modules de mesure laser ou inversement.

Selon une configuration particulière, ladite pièce mécanique circulaire à denture étant un arbre à denture disposé le long de l'axe principal et comprenant une pluralité de dentures placées les une à la suite des autres selon l'axe principal de rotation, lesdits moyens de balayage sont tels qu'ils comprennent des moyens d'entrainement en translation de la pièce mécanique le long de l'axe principal par rapport aux modules de mesure laser ou inversement.

Les moyens d'entrainement permettent un balayage desdites première et deuxième faces de chaque dent sur toute leur épaisseur et profondeur et pour chaque denture. Cette configuration permet de réaliser un balayage séquencé des différentes dentures présentes à différents niveaux sur la pièce (comme c'est le cas pour les arbres à denture multiple par exemple).

Cette configuration permet en outre de balayer les parties restantes de l'arbre exemptes de dentures, sur tout leur pourtour (au cours de la rotation) et toute leur hauteur (au cours de la translation), en particulier pour déterminer la position de l'axe principal de rotation de la pièce.

Selon une alternative, ladite pièce mécanique circulaire à denture étant un arbre à denture disposé le long de l'axe principal et comprenant une pluralité de dentures placées les une à la suite des autres selon l'axe principal, lesdits moyens de balayage sont tels qu'ils comprennent au moins un deuxième couple de modules de mesure laser chacun placé au niveau de chaque denture de ladite pluralité pour permettre un balayage desdites première et deuxième faces de chaque dent sur toute leur épaisseur et profondeur et pour chaque denture.

Cette configuration permet de réaliser un balayage simultané de l'ensemble des dentures placées à différents niveaux le long de l'axe principal de la pièce (comme c'est le cas pour les arbres à denture multiple par exemple), ce qui permet de réduire le temps de contrôle de la pièce.

Selon un aspect particulier de l'invention, lesdits moyens de balayage comprennent en outre au moins un troisième couple de modules de mesure laser orientés par rapport à ladite pièce de façon à ce qu'au cours de la rotation desdits modules ou de ladite pièce autour de l'axe principal et au cours de la translation desdits modules ou de ladite pièce par rapport à l'axe principal, lesdits moyens de balayage balayent en outre ledit arbre sur tout son pourtour et sa hauteur.

Cela permet de déterminer avec précision la position de l'axe principal de rotation de la pièce.

Selon un autre aspect particulier de l'invention, ladite pièce mécanique circulaire à denture comprend un trou circulaire ayant pour axe l'axe principal de rotation de ladite pièce, et ledit module de mesure laser additionnel est orienté par raport à ladite pièce de façon à ce qu'au cours de la rotation desdits modules ou de ladite pièce autour de l'axe principal, lesdits moyens de balayage balayent le trou sur toute sa surface.

Ainsi, cela permet de contrôler d'autres parties essentielles d'une pièce mécanique à denture avec le simple ajout d'un module de mesure laser. Elle permet notamment de déterminer la position exacte de l'axe principal de la pièce à contrôler. Le trou peut être traversant ou non-traversant, présenter une surface lisse ou non lisse, avec des rainures ou un taraudage par exemple.

Selon une caractéristique particulière, la pièce mécanique circulaire à denture appartient au groupe comprenant :
- pièce à denture droite ;
- pièce à denture hélicoïdale ;
- pièce à denture en chevron.
Cette liste n'est pas exhaustive.

Selon un aspect particulièrement avantageux de l'invention, les modules de mesure sont dotés d'une source d'émission laser de type ligne.

Le laser ligne permet d'obtenir un champ de balayage suffisant pour couvrir toute la profondeur des dents de la pièce.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 représente une vue en perspective d'un ensemble de modules de mesure d'un dispositif de contrôle tridimensionnel, selon un mode de réalisation particulier de l'invention, réalisant un balayage de la surface d'une roue dentée ;
- les figures 2A-2F sont des vues schématiques montrant différentes phases du processus de balayage laser de la roue dentée illustrée dans le cadre du mode de réalisation de la figure 1 ;
- la figure 3 présente, sous forme de blocs fonctionnels, la structure schématique d'un dispositif de contrôle tridimensionnel selon un mode de réalisation particulier de l'invention ;
- la figure 4 représente une vue en perspective d'un dispositif de contrôle tridimensionnel réalisant un balayage de la surface d'un arbre à multi-denture selon un mode de réalisation particulier de l'invention ;
- les figures 5A-5C représentent des vues partielles et détaillées du dispositif de contrôle illustré à la figure 4 ;
- la figure 6 représente un schéma illustrant une orientation particulière d'un faisceau laser pour un module de mesure balayant une face de dent.

### 6. DESCRIPTION DÉTAILLÉE

Sur toutes les figures du présent document, les éléments et étapes identiques sont désignés par une même référence numérique.

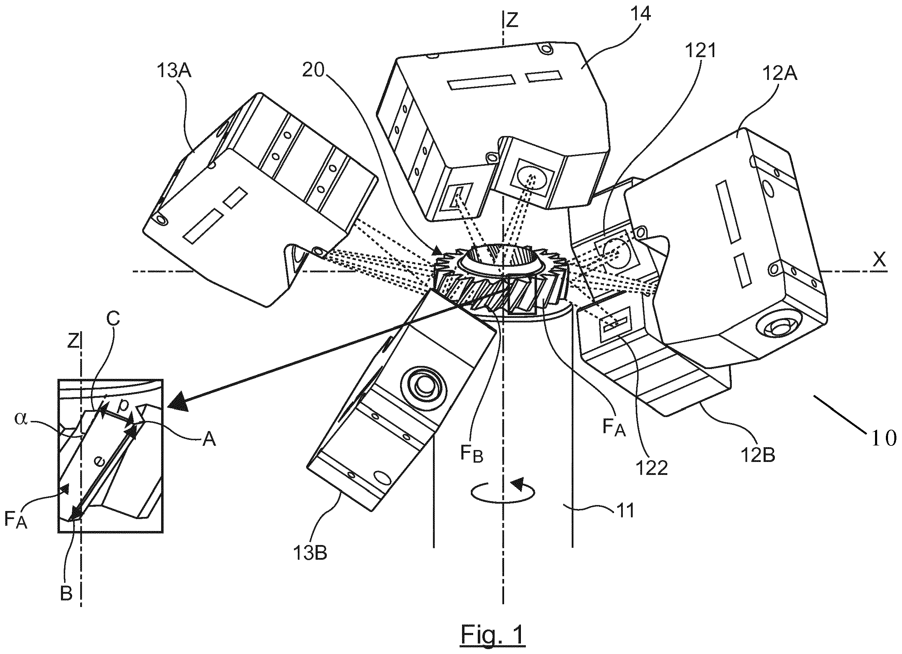

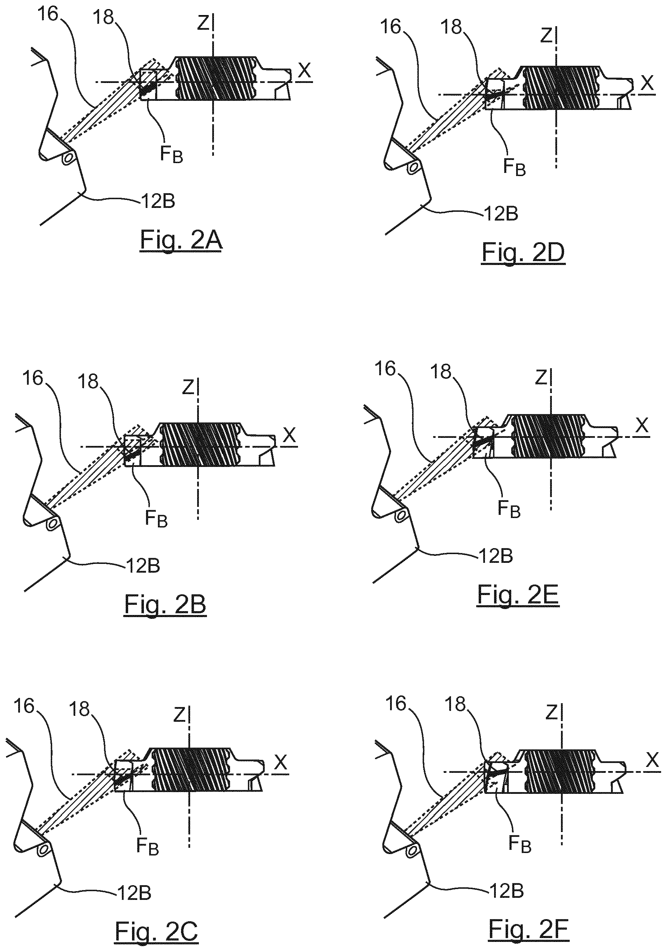

On présente en relation avec les **figures 1****,** **2A** à **2D** la structure et le fonctionnement d'un dispositif de contrôle tridimensionnel sans contact 10, selon un mode de réalisation particulier de l'invention, adapté au contrôle de pièces mécaniques circulaires à denture se présentant sous la forme d'une roue dentée (ou pignon) 20.

Le dispositif de contrôle 10 comprend, dans le mode de réalisation illustré sur la figure 1, un porte-objet 11 qui est monté mobile en rotation par rapport à un châssis (non illustré sur la figure). Le porte-objet 11 assure le maintien de la roue dentée 20 à contrôler au sein du dispositif. Le porte-objet 11 coopère avec un système qui permet d'entraîner le porte-objet en rotation, l'ensemble formant des moyens d'entrainement en rotation de la roue dentée selon l'invention.

De manière générale, une roue dentée 20 présente un axe principal de rotation Z et un axe radial X orthogonal à l'axe Z. Chaque dent de la roue dentée 20 a une épaisseur e donnée le long de l'axe principal (correspondant au segment AB) et une profondeur p donnée le long de l'axe radial (correspondant au segment AC). Chaque dent présente également deux faces principales F_{A} et F_{B}. Dans cet exemple, l'épaisseur de la roue dentée 20 est de 2,5 cm et sa profondeur 1 cm par exemple.

La roue dentée 20 est une pièce annulaire dotée d'une denture externe et d'un trou traversant le long de son axe principal. Ce trou peut présenter une paroi interne lisse ou taraudé par exemple.

Sur la **figure 1****,** le dispositif de contrôle 10 selon l'invention met en œuvre quatre modules de mesure laser dédiés au contrôle de la denture de la roue dentée 20, à savoir : un premier couple de modules de mesure laser 12A-12B dédié à une première mesure de surface des dents de la roue dentée 20 et un deuxième couple de modules de mesure laser 13A-13B dédié à une deuxième mesure de surface des dents de la roue dentée 20. Plus particulièrement, chaque couple de modules de mesure laser (12A-12B; 13A-13B) est constitué d'un premier module (12A; 13A) orienté vers une première face F_{A} d'une dent de la denture et un deuxième module orienté vers la deuxième face d'une autre dent de la denture. Ainsi, les premiers modules 12A et 13A sont disposés sensiblement en contre haut par rapport à la roue dentée 20 et les deuxièmes modules 12B et 13B sont disposés sensiblement en contre bas par rapport à celle-ci.

Pour un couple de modules de mesure donné, les deux modules de mesure d'un couple donné sont disposés de façon à mesurer une même dent de la denture ou deux dents distinctes de la denture comme c'est le cas sur la **figure 1****.** Chaque module de mesure laser des deux couples de modules représentés ici est solidaire d'un châssis au moyen d'un support (non illustré), qui peut être configurable ou modulable en fonction de la pièce à contrôler et de ses caractéristiques dimensionnelles. Cela permet d'orienter chaque module de mesure convenablement en fonction de la face des dents à laquelle il est associé et des dimensions de la roue dentée 20.

Dans l'exemple illustré ici, les modules de mesure laser 12A, 12B, 13A et 13B sont fixes et c'est le porte-objet 11 qui est mobile en rotation autour de l'axe principal Z de la roue dentée 20. Bien sûr, on pourrait envisager une variante de réalisation dans laquelle le porte-objet 11 est fixe et c'est le bâti auquel les modules sont solidairement fixés qui est mobile en rotation autour de l'axe principal Z de la roue dentée 20.

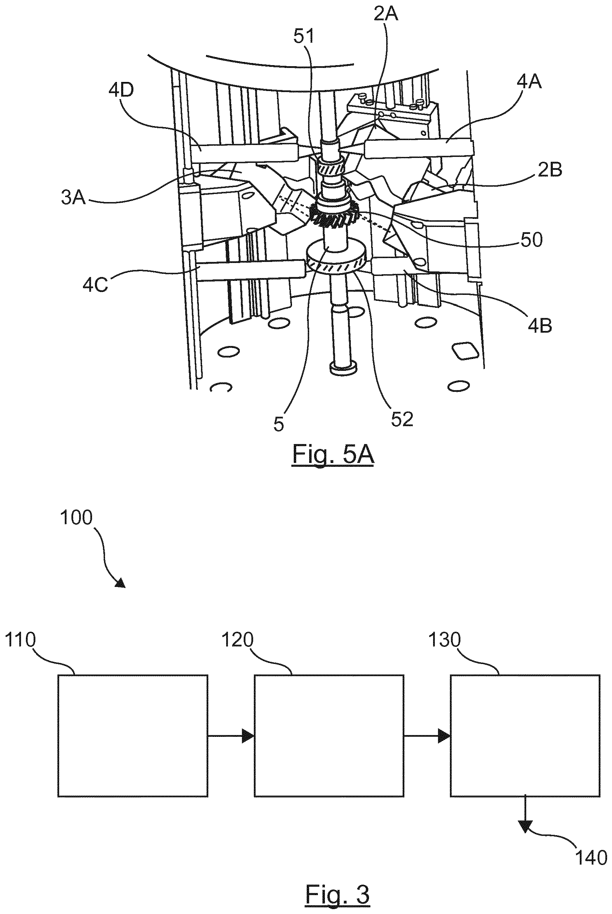

L'ensemble des modules de mesure laser illustrés ici constitue les moyens de balayage laser du dispositif selon l'invention. Les moyens de balayage laser sont associés à des moyens de traitement de mesures acquises par les moyens de balayage, (dont le principe est détaillé plus loin en relation avec la **figure 3**) pour reconstruire la surface tridimensionnelle de la roue dentée et réaliser un contrôle dimensionnel de celle-ci.

Selon l'invention, les modules de mesure laser 12A, 12B, 13A et 13B sont orientés par rapport à la roue dentée 20 de façon à ce qu'au cours d'une rotation de la roue dentée 20 autour de son axe principal Z, les moyens de balayage balayent les première et deuxième faces principales F_{A} et F_{B} de chaque dent de la denture sur toute leur épaisseur e et profondeur p.

Les figures **2A** à **2F** représentent différentes phases du processus de balayage laser de la roue dentée 20 pour un module de mesure laser donné, tel que le module 12B par exemple. Seul le faisceau laser émis par le module de mesure est illustré ici pour des raisons de lisibilité des dessins.

Le module de mesure 12B est, dans cet exemple, un module de mesure laser fonctionnant selon le principe de la triangulation laser. De façon connue, un tel module de mesure est apte à mesurer une distance par calcul angulaire. Il couvre, par ailleurs, une grande plage de mesure et présente une haute résolution. D'autres technologies connues que la triangulation laser peuvent bien sûr être utilisées sans sortir du cadre de l'invention. Le module de mesure 12B comprend une source d'émission laser 121, par exemple une diode laser, qui projette un faisceau laser plan 16 sur l'une des faces des dents à balayer (face principale F_{B} ici) et un récepteur laser 122, par exemple un capteur de type CCD (pour *"Charge-Coupled Device"* en anglais) ou CMOS (pour *"Complementarity Metal-Oxide-Semiconductor"* en anglais). La source d'émission laser et le récepteur laser correspondant sont situés sur la même face du module de mesure, cette face étant orientée vers la roue dentée 20.

Les autres modules de mesure 12A, 13A et 13B sont, de préférence, identiques. De manière générale, pour maximiser la qualité du balayage laser, les modules de mesure de chaque couple doivent être de technologie identique.

Lorsque le porte-objet 11 (et donc la roue dentée 20) est mis en rotation, le faisceau laser émis par la source est réfléchi sur la face F_{B} de la roue dentée 20 dont on désire connaitre la position ou l'éloignement par rapport à la source laser (c'est-à-dire par rapport au module de mesure 12B). Le récepteur laser 122 est orienté pour capter le faisceau laser provenant de la roue dentée 20. Le faisceau laser réfléchi atteint le récepteur 122 sous un angle qui est fonction de la distance. La position du faisceau laser réfléchi sur le récepteur 122 ainsi que la distance séparant la source et le récepteur du module de mesure 12B, permettent de déduire des informations de distance pour chaque point de mesure acquis.

L'intersection entre le faisceau laser 16 et la face F_{B} de la dent forme une ligne laser de balayage 18 qui se déplace sur la face balayée F_{B} au fur et à mesure que la roue dentée 20 tourne autour de son axe principal, comme illustré sur les figures 2A à 2F.

Plus particulièrement, selon l'invention, le module de mesure 12B est agencé de sorte que la source d'émission 121 soit orientée par rapport à l'axe principal de rotation Z d'une part et par rapport à un axe radial X de la roue dentée 20 d'autre part, pour que la ligne laser 18 couvre toute la profondeur de la denture *p* (c'est-à-dire de la tête au pied de chaque dent) et que la ligne laser 18 balaye toute l'épaisseur de la denture e au fur et à mesure de la rotation de la roue dentée 20.

En d'autres termes, le module de mesure 12B est agencé par rapport à la roue dentée 20 de sorte que la ligne laser 18 couvre toute la profondeur des dents, le balayage des dents sur leur épaisseur étant assuré grâce à rotation de la roue dentée 20.

Une des conditions sur l'orientation de modules est que l'axe d'orientation du faisceau laser des modules peut être incliné par rapport à l'axe radial et l'axe principal de rotation, mais ne doit pas être pas être orthogonal avec l'axe principal de rotation.

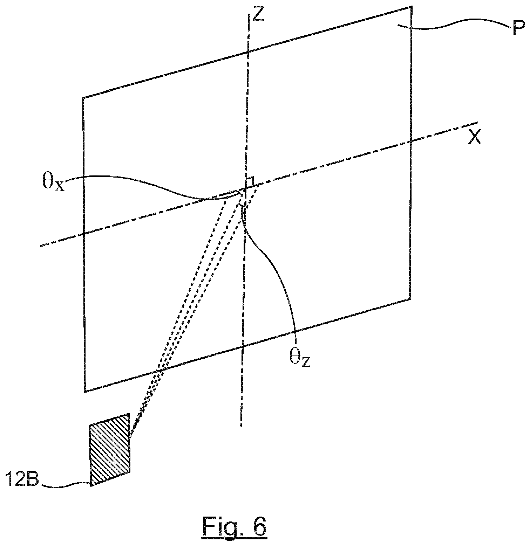

La **figure 6** illustre un exemple particulier d'orientation du faisceau laser du module de mesure 12B par rapport à la face d'une des dents en cours de balayage. On note P le plan contenant l'axe principal Z et l'axe radial X. Le module de mesure 12B est orienté vers la deuxième face F_{B} de sorte que le faisceau laser soit incliné vers le haut par rapport à l'axe radial X d'un angle θx compris entre 10 et 45 degrés (par exemple 30 degrés) et d'un angle θz par rapport à l'axe principal de rotation Z compris entre 10 et 45 degrés (par exemple 20 degrés). Les angles θx et θz dépendent notamment de l'angle d'inclinaison α des dents de la denture (ou angle d'hélice). L'angle d'inclinaison α varie usuellement entre 15 et 30 degrés par exemple pour les pièces de type pignon.

Le même principe s'applique au premier module 12A du couple de module de mesure 12A et 12B, le faisceau laser dudit module 12 A devant être incliné vers le bas rapport à l'axe radial X de l'angle θx pour faire face à la face de dent correspondante F_{A}.

Enfin, afin de réaliser un balayage de la roue dentée 20 dans sa globalité (et non pas uniquement au niveau de la denture de la pièce), les moyens de balayage comprennent un cinquième module de mesure laser 14, distinct des deux couples de module 12A-12B et 13A-13B, placé sensiblement en contre haut par rapport à la roue dentée 20, de façon à permettre un balayage laser au niveau de la surface supérieure de la roue dentée 20, et plus précisément au niveau du trou traversant. Les mesures issues de ce module de mesure 14 permettent notamment de mesurer l'axe principal de rotation de la roue dentée 20 et de contrôler les dimensions du trou traversant. Le fonctionnement du module de mesure 14 est identique à celui décrit plus haut pour les autres modules de mesure.

A noter que, dans les cas où la roue dentée à contrôler présenterait une denture d'épaisseur telle que la taille du faisceau laser des moyens de balayage ne permette qu'un balayage partiel de l'épaisseur de la denture lors de la rotation, on peut prévoir que les moyens de balayage soient en outre dotés de moyens d'entrainement en translation de la roue dentée 20 le long de l'axe principal Z par rapport aux modules de mesure laser (ou inversement), pour assurer un balayage complet sur toute l'épaisseur de la denture. On peut donc envisager de prévoir un mouvement simultané ou séquencé en rotation et en translation de la pièce par rapport aux modules de mesure laser (ou inversement).

Le nombre de couples de modules de mesure n'est pas limité à l'exemple illustré précédemment. Un nombre plus important (c'est-à-dire supérieur à 2) ou moins important (c'est-à-dire inférieur à 2) pourrait être envisagé sans sortir du cadre de l'invention, suivant notamment la complexité de la forme de la pièce mécanique, le nombre de points de mesure souhaité et/ou du temps de traitement souhaité, et/ou d'autres paramètres que l'homme du métier jugera bon de prendre en compte.

On présente maintenant, en relation avec la **figure 3****,** sous forme de blocs fonctionnels, les caractéristiques génériques d'un dispositif de contrôle tridimensionnel 100 selon un mode de réalisation particulier de l'invention.

Le dispositif de contrôle 100 comprend des moyens de balayage 110 de chacune des dents de la denture de la pièce à contrôler. Ces moyens de balayage sont dotés de modules de mesure laser et des moyens d'entrainement tels que décrits plus haut en relation avec les figures **1****,** **2A** à **2F.**

Le dispositif de contrôle 100 comprend des moyens de construction 120 d'une représentation tridimensionnelle virtuelle de la pièce à partir des données (ou points de mesure) issues des moyens de balayage 110. Pour ce faire, le dispositif de contrôle 100 met en œuvre un logiciel de traitement du nuage de points et de représentation tridimensionnelle virtuelle de la pièce à contrôler. Les données issues des modules se présentent sous la forme de nuages de points de coordonnées définies dans un espace à trois dimensions. Le temps nécessaire au relevé des points est relativement court (entre 1 et 30 millions de points, selon le nombre de modules de mesure, ces points étant acquis dans un intervalle de temps compris entre 1 s et 5 s). Généralement, une unique rotation de 360 degrés de la pièce (à l'altitude où une mesure de la pièce est nécessaire) suffit pour acquérir l'ensemble des points de mesure nécessaires à la reconstruction 3D et au contrôle dimensionnel de la pièce.

Le dispositif de contrôle 100 comprend des moyens de contrôle dimensionnel 130 de la pièce en fonction de la représentation tridimensionnelle virtuelle obtenue par les moyens de construction 120. Les moyens de contrôle 130 sont configurés pour délivrer 140 au moins une grandeur représentative d'une dimension de la pièce mécanique ou une information d'acceptation ou de refus de la pièce soumise au contrôle en fonction du résultat du contrôle réalisé par les moyens de contrôle 130 (respect ou non des tolérances dimensionnelles et/ou géométriques imposées, etc.).

Un tel dispositif de contrôle s'intègre aisément dans une ligne de production.

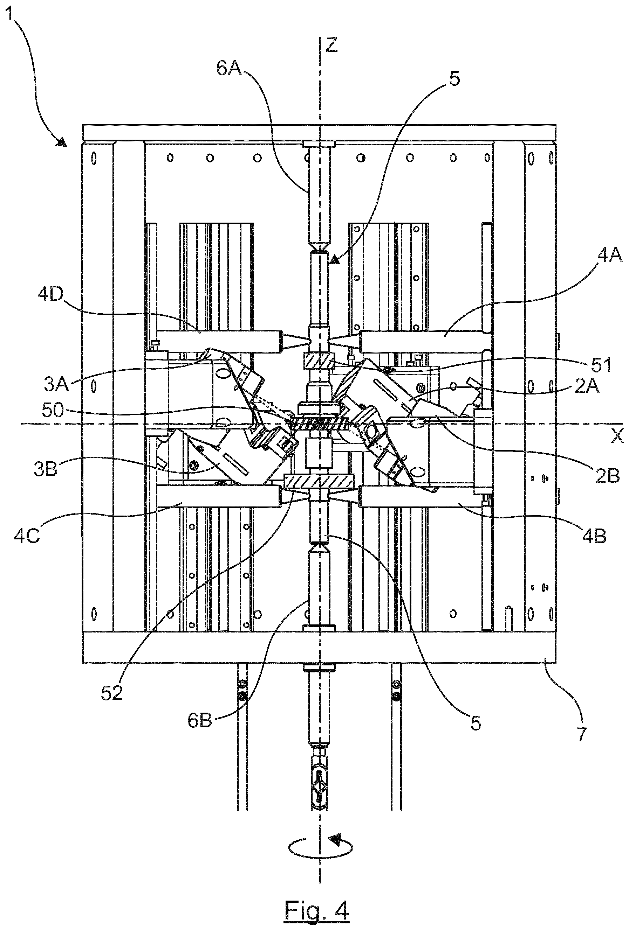

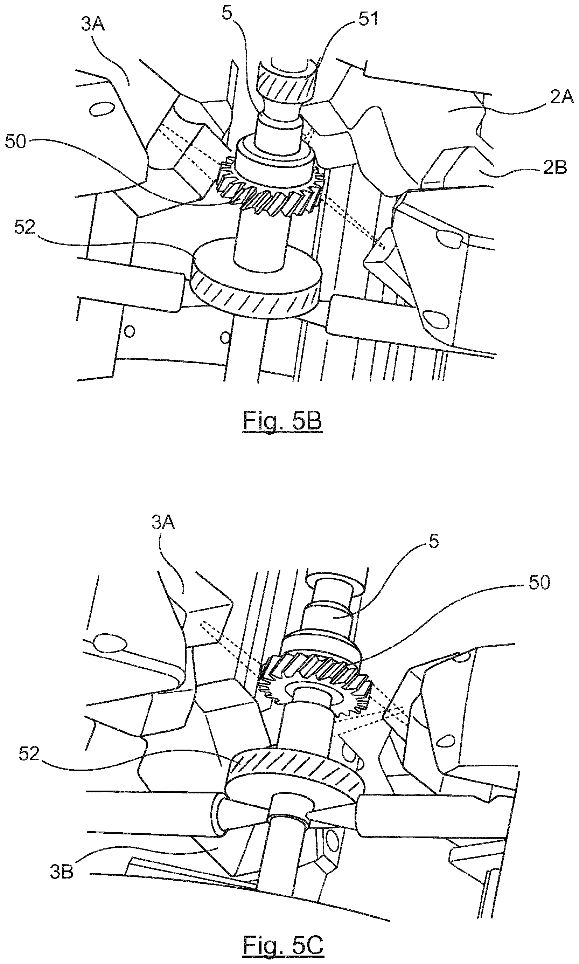

On présente maintenant en relation avec les **figures 4****,** **5A à 5C** la structure et le fonctionnement d'un dispositif de contrôle tridimensionnel 1 sans contact adapté au contrôle de pièces mécaniques circulaires à denture se présentant sous la forme d'un arbre à denture multiple 5.

Le dispositif de contrôle 1 comprend deux bras verticaux 6A et 6B sous forme de pointes assurant le maintien de l'arbre à denture 5 à chacune de ses extrémités suivant son axe de rotation principal. Le bras 6B coopère avec un système d'entrainement double rotation et translation, permettant la mise en rotation et/ou en translation l'arbre à denture 5 par rapport au châssis 7, qui lui est fixe. Le bras 6A coopère avec un système d'entrainement simple en translation (guidage en translation de l'arbre le long de son axe principal). Ces éléments forment les moyens d'entrainement en rotation et en translation du dispositif selon l'invention.

L'arbre à denture 5 présenté ici comprend trois dentures 50, 51 et 52 placées à différents niveaux de l'arbre selon l'axe principal de rotation Z. L'axe radial de la denture 50 par exemple est noté X, et est orthogonal à Z. Chaque denture peut être de type différente (denture hélicoïdale, droite, en chevron, etc.) et présenter différentes dimensions.

Dans la suite de la description, on s'attache à décrire dans un premier temps le dispositif pour réaliser un contrôle de la denture hélicoïdale 50 de l'arbre 5.

Le dispositif de contrôle 1 selon l'invention met en œuvre quatre modules de mesure laser pour contrôler la denture 50 de l'arbre 5, à savoir : un premier couple de modules de mesure laser 2A-2B dédié à une première mesure de surface des dents de la denture 50 et un deuxième couple de modules de mesure laser 3A-3B dédié à une deuxième mesure de surface des dents de la denture 50. Plus particulièrement, chaque couple de modules de mesure laser (2A-2B; 3A-3B) est constitué d'un premier module (2A; 3A) orienté vers une première face F_{A} d'une dent de la denture et un deuxième module orienté vers la deuxième face d'une autre dent de la denture, selon le même principe que celui développé plus haut en relation avec la roue dentée (figures 1, 2A à 2F). Ainsi, selon l'invention, les modules de mesure laser 2A, 2B, 3A et 3B sont orientés par rapport à la denture 50 de façon à ce qu'au cours d'une rotation de l'arbre 5 autour de son axe principal Z, les moyens de balayage assurent un balayage des premières et deuxième faces principales F_{A} et F_{B} de chaque dent de la denture 50 sur toute leur épaisseur et profondeur.

En plus des moyens d'entrainement en rotation, sont prévus dans le dispositif de contrôle 1 des moyens d'entrainement en translation de l'arbre à denture 5, pour pouvoir guider l'arbre le long de son axe principal Z, au cours ou non de la rotation de l'arbre à denture 5 (un mouvement de translation de l'arbre peut mis en œuvre simultanément ou non simultanément à un mouvement de rotation). Cela permet d'une part d'assurer un balayage complet sur toute l'épaisseur d'une denture lorsque celle-ci présente une denture d'épaisseur telle que la taille du faisceau laser des modules de mesures ne permet pas de couvrir toute l'épaisseur de la denture. D'autre part, les moyens d'entrainement en translation peuvent être activés pour déplacer la pièce le long de l'axe principal pour permettre un balayage et une acquisition des points de mesure des autres dentures 51 et 52 de l'arbre (cela a pour effet de permettre un balayage des première et deuxième faces principales de chaque dent sur toute leur épaisseur et profondeur, et ce pour chaque denture) et, éventuellement, des autres parties de la pièce afin de réaliser un contrôle complet de l'arbre à denture 5. A noter que pour réaliser un balayage séquencé des dentures 50, 51 et 52 par les mêmes couples de modules de mesure, le type de profil et les dimensions doivent être sensiblement similaires. Cela dépend du champ de mesure des modules de mesures utilisés dans le dispositif de contrôle (le champ de mesure pouvant effectivement varier de quelques millimètres à quelques centimètres en fonction de la technologie des modules de mesure). Le cas échéant l'orientation des modules de mesure laser 2A, 2B, 3A, 3B devra être adaptée en fonction du type de denture dont la pièce est dotée. Une mécanique d'orientation automatique de modules pourra être envisagée pour s'adapter en temps réel à la forme et aux dimensions de la pièce mécanique à contrôler.

Cette configuration permet de réaliser un balayage séquencé des différentes parties de l'arbre 5 y compris toutes les dentures.

A titre d'alternative à cette configuration, les moyens de balayage peuvent comprendre au moins un autre couple de modules de mesure laser (non illustré sur les figures) placé au niveau de chaque denture de l'arbre pour permettre un balayage et une acquisition de points de mesures des faces de chaque dent de chaque denture sur toute leur épaisseur et profondeur (orientation des modules configurables en temps réel).

Cette configuration permet de réaliser un balayage simultané de l'ensemble des dentures placées à différents niveaux le long de l'axe principal de l'arbre à denture 6, réduisant ainsi le temps de contrôle de la pièce.

Ainsi, le dispositif selon l'invention permet un contrôle automatique, complet et sans contact de pièce pouvant présenter une forme complexe, notamment avec plusieurs niveaux de denture, elles-mêmes pouvant présenter différents profils de dents, différentes dimensions (profondeur, épaisseur, diamètre, etc.).

En outre, les moyens de balayage peuvent être configurés pour balayer, en sus des dentures, la surface des parties restantes de l'arbre 5, afin de permettre de déterminer la position de l'axe principal de rotation de la pièce. Dans une variante de réalisation, cette opération de balayage est assurée par les modules de mesure additionnels 4A, 4B, 4C, 4D, disposés de manière fixe par rapport au bâti 7 et perpendiculaires par rapport à l'axe de la pièce. La surface desdites parties restantes de l'arbre 5 est contrôlée en activant les moyens d'entrainement en rotation et les moyens d'entrainement en translation de l'arbre 5 par rapport aux modules de mesure de façon à balayer la surface desdites parties restantes sur tout leur pourtour et sur toute leur hauteur respectivement.

## Revendications

1. Dispositif de contrôle tridimensionnel sans contact d'une pièce mécanique circulaire à denture (20) ayant un axe principal de rotation (Z), les dents de ladite denture ayant une épaisseur et une profondeur définies, chaque dent possédant une première et deuxième faces (F_{A}, F_{B}), ledit dispositif comprenant :
- des moyens de balayage de ladite pièce comprenant :
* au moins un premier couple de modules de mesure laser (12A, 12B) et des moyens d'entrainement en rotation (11) autour de l'axe principal de ladite pièce par rapport aux modules de mesure laser ou inversement ;
* au moins un module de mesure laser additionnel (14) configuré pour mesurer l'axe principal de ladite pièce ;
- des moyens de construction d'une représentation tridimensionnelle virtuelle de ladite pièce à partir de données provenant desdits moyens de balayage ;
- des moyens de contrôle dimensionnel à partir de ladite représentation tridimensionnelle virtuelle reconstruite ;
- chaque couple de modules de mesure laser comprenant un premier module (12A) orienté vers une première face (F_{A}) d'une dent et un deuxième module (12B) orienté vers une deuxième face (F_{B}) d'une dent ;
lesdits modules de mesure laser étant orientés par rapport à ladite pièce de façon à ce qu'au cours d'une rotation desdits modules ou de ladite pièce autour de l'axe principal, lesdits moyens de balayage balayent lesdites première et deuxième faces de chaque dent sur toute leur épaisseur et profondeur.

2. Dispositif selon la revendication 1, dans lequel chaque module de mesure laser comprend une source d'émission d'un faisceau laser orienté par rapport à l'axe principal de rotation et par rapport à un axe radial (X) de ladite pièce, et d'un récepteur de faisceau laser orienté pour capter le faisceau laser provenant de ladite pièce.

3. Dispositif selon la revendication 2, dans lequel le faisceau laser est orienté par rapport à l'axe principal de rotation d'un premier angle compris entre 10 et 45 degrés et rapport à l'axe radial d'un deuxième angle compris entre 10 et 45 degrés.

4. Dispositif selon l'une quelconque des revendications 1 à 3, dans lequel lesdits moyens de balayage comprennent des moyens d'entrainement en translation de la pièce mécanique le long de l'axe principal par rapport aux modules de mesure laser ou inversement.

5. Dispositif selon l'une quelconque des revendications 1 à 3, dans lequel, ladite pièce mécanique circulaire à denture étant un arbre à denture disposé le long de l'axe principal et comprenant une pluralité de dentures placées les une à la suite des autres selon l'axe principal de rotation, lesdits moyens de balayage comprennent des moyens d'entrainement en translation de la pièce mécanique le long de l'axe principal par rapport aux modules de mesure laser ou inversement.

6. Dispositif selon l'une quelconque des revendications 1 à 3, dans lequel ladite pièce mécanique circulaire à denture est un arbre à denture disposé le long de l'axe principal et comprenant une pluralité de dentures placées les une à la suite des autres selon l'axe principal, et dans lequel lesdits moyens de balayage comprennent au moins un deuxième couple de modules de mesure laser chacun placé au niveau de chaque denture de ladite pluralité pour permettre un balayage desdites première et deuxième faces de chaque dent sur toute leur épaisseur et profondeur et pour chaque denture.

7. Dispositif selon la revendication 6, dans lequel lesdits moyens de balayage comprennent en outre au moins un troisième couple de modules de mesure laser orientés par rapport à ladite pièce de façon à ce qu'au cours de la rotation desdits modules ou de ladite pièce autour de l'axe principal et au cours de la translation desdits modules ou de ladite pièce par rapport à l'axe principal, lesdits moyens de balayage balayent en outre ledit arbre sur tout son pourtour et sa hauteur.

8. Dispositif selon l'une quelconque des revendications 1 à 4, dans lequel ladite pièce mécanique circulaire à denture est une roue dentée comprenant un trou circulaire ayant pour axe l'axe principal de rotation de ladite pièce, et dans lequel ledit au moins un module de mesure laser additionnel est orienté par rapport à ladite pièce de façon à ce qu'au cours de la rotation desdits modules ou de ladite pièce autour de l'axe principal, lesdits moyens de balayage balayent le trou sur toute sa surface.

9. Dispositif selon l'une quelconque des revendications 1 à 8, dans lequel la pièce mécanique circulaire à denture appartient au groupe comprenant :
- pièce à denture droite ;
- pièce à denture hélicoïdale ;
- pièce à denture en chevron.

10. Dispositif selon l'une quelconque des revendications 1 à 9, dans lequel les modules de mesure sont dotés d'une source d'émission laser de type ligne.

## Patentansprüche

1. Vorrichtung zur berührungslosen dreidimensionalen Inspektion einer verzahnten kreisförmigen mechanischen Komponente (20) mit einer Hauptdrehachse (Z), wobei die Zähne der Verzahnung eine definierte Dicke und Tiefe haben, wobei jeder Zahn eine erste und eine zweite Seite (F_{A}, F_{B}) besitzt, wobei die Vorrichtung umfasst:
- Mittel zum Scannen der ersten Komponente, umfassend:
*mindestens ein erstes Paar von Lasermessmodulen (12A, 12B) und Mittel (11) zum Drehantrieb der Komponente um die Hautachse relativ zu den Lasermessmodulen oder umgekehrt;
*mindestens ein zusätzliches Lasermessmodul (14), das dazu eingerichtet ist, die Hauptachse der Komponente zu messen;
- Mittel zur Konstruktion einer virtuellen dreidimensionalen Darstellung der Komponente aus Daten, die von den Scanning-Mitteln kommen;
- Mittel zur Dimensionskontrolle auf Basis der rekonstruierten virtuellen dreidimensionalen Darstellung;
- wobei jedes Paar von Lasermessmodulen ein erstes Modul (12A), das auf eine erste Seite (F_{A}) eines Zahns ausgerichtet ist, und ein zweites Modul (12B), das auf eine zweite Seite (F_{B}) eines Zahns ausgerichtet ist, umfasst;
wobei die Lasermessmodule in Bezug zu der Komponente derart ausgerichtet sind, dass während einer Drehung der Module oder der Komponente um die Hauptachse die Scanning-Mittel die erste und zweite Seite jedes Zahns auf ihrer gesamten Dicke und Tiefe scannen.

2. Vorrichtung nach Anspruch 1, bei der jedes Lasermessmodul eine Sendequelle eines Laserstrahls, der relativ zur Hauptdrehachse und relativ zu einer radialen Achse (X) der Komponente ausgerichtet ist, und einen Empfänger eines Laserstrahls umfasst, der ausgerichtet ist, um den von der Komponente kommenden Laserstrahl einzufangen.

3. Vorrichtung nach Anspruch 2, bei der der Laserstrahl relativ zur Hauptdrehachse in einem ersten Winkel zwischen 10 und 45 Grad und relativ zur radialen Achse in einem zweiten Winkel zwischen 10 und 45 Grad ausgerichtet ist.

4. Vorrichtung nach einem der Ansprüche 1 bis 3, bei der die Scanning-Mittel Mittel zum translatorischen Antrieb der mechanischen Komponente entlang der Hauptachse relativ zu den Lasermessmodulen oder umgekehrt umfassen.

5. Vorrichtung nach einem der Ansprüche 1 bis 3, wobei, während die verzahnte kreisförmige mechanische Komponente eine Welle mit Verzahnung ist, die entlang der Hauptachse angeordnet ist und eine Vielzahl von nacheinander entlang der Hauptdrehachse angeordneten Zähnen umfasst, die Scanning-Mittel Mittel zum translatorischen Antrieb der mechanischen Komponente entlang der Hauptachse relativ zu den Lasermessmodulen oder umgekehrt umfassen.

6. Vorrichtung nach einem der Ansprüche 1 bis 3, wobei die verzahnte kreisförmige mechanische Komponente eine Welle mit Verzahnung ist, die entlang der Hauptachse angeordnet ist und eine Vielzahl von nacheinander entlang der Hauptdrehachse angeordneten Zähnen umfasst, und bei der die Scanning-Mittel mindestens ein zweites Paar von Lasermessmodulen umfassen, die jeweils im Bereich jeder Zahnung der Vielzahl angeordnet sind, um ein Scannen der ersten und zweiten Seiten jedes Zahns auf ihrer gesamten Dicke und Tiefe und für jede Verzahnung zu ermöglichen.

7. Vorrichtung nach Anspruch 6, bei der die Scanning-Mittel ferner mindestens ein drittes Paar von Lasermessmodulen umfassen, die relativ zu der Komponente derart ausgerichtet sind, dass während der Drehung der Module oder der Komponente um die Hauptachse und während der Translation der Module oder der Komponente relativ zur Hauptachse die Scanning-Mittel ferner die Welle auf ihrem gesamten Umfang und ihrer gesamten Höhe scannen.

8. Vorrichtung nach einem der Ansprüche 1 bis 4, bei der die verzahnte kreisförmige Komponente ein Zahnrad ist, umfassend ein kreisförmiges Loch, das als Achse die Hauptdrehachse der Komponente hat, und bei der mindestens ein zusätzliches Lasermessmodul in Bezug zu der Komponente derart ausgerichtet ist, dass während der Drehung der Module oder der Komponente um die Hauptachse die Scanning-Mittel das Loch auf seiner gesamten Oberfläche scannen.

9. Vorrichtung nach einem der Ansprüche 1 bis 8, bei der die verzahnte kreisförmige mechanische Komponente der Gruppe angehört, umfassend:
- Komponente mit Geradverzahnung;
- Komponente mit Schrägverzahnung;
- Komponente mit Doppelschrägverzahnung.

10. Vorrichtung nach einem der Ansprüche 1 bis 9, bei der die Messmodule mit einer linienförmigen Lasersendequelle ausgestattet sind.

## Claims

1. Device for the contactless three-dimensional inspection of a circular, mechanical component (20) with toothing having a main axis of rotation (Z), the teeth of said toothing having a defined thickness and a defined depth, each tooth having a first face and a second face (F_{A}, F_{B}), said device comprising:
- means for scanning said component comprising:
* at least one first pair of laser measurement modules (12A, 12B) and means for the rotational driving (11), around the main axis of said component, of said component relative to the laser measurement modules, or vice versa;
* at least one laser measurement module (14) configured to measure the main axis of said component;
- means for building a virtual three-dimensional representation of said component using data coming from said scanning means;
- means of dimensional inspection using said rebuilt virtual three-dimensional representation;
- each pair of laser measurement modules comprising a first module (12A) oriented towards a first face (F_{A}) of a tooth and a second module (12B) oriented towards a second face (F_{B}) of a tooth;
said laser measurement modules being oriented relative to said component so that during a rotation of said modules or of said component around the main axis, said scanning means scan said first and second faces of each tooth throughout their thickness and depth.

2. Device according to claim 1, wherein each laser measurement module comprises a source of emission of a laser beam oriented relative to the main axis of rotation and relative to a radial axis (X) of said component, and a laser beam receiver oriented to pick up the laser beam coming from said component.

3. Device according to claim 2, wherein the laser beam is oriented relative to the main axis of rotation by a first angle ranging from 10 to 45 degrees and relative to the radial axis by a second angle ranging from 10 to 45 degrees.

4. Device according to any one of the claims 1 to 3, wherein said scanning means comprise means for driving the mechanical component in translation along the main axis relative to the laser measurement modules, or vice versa.

5. Device according to any one of the claims 1 to 3, wherein, said circular mechanical component with toothing being a shaft with toothing disposed along the main axis and comprising a plurality of toothings placed one after the other along the main axis of rotation, said scanning means comprise means for the driving in translation of the mechanical component along the main axis relative to the laser measurement modules, or vice versa.

6. Device according to any one of the claims 1 to 3, wherein said circular mechanical component with toothing is a shaft with toothing disposed along the main axis and comprising a plurality of toothings placed one after the other along the main axis, and wherein said scanning means comprise at least one second pair of laser measurement modules, each placed at the level of each toothing of said plurality to enable a scanning of said first and second faces of each tooth throughout their thickness and depth and for each toothing.

7. Device according to claim 6, wherein said scanning means furthermore comprise at least one third pair of laser measurement modules oriented relative to said component so that, during the rotation of said modules or said component around the main axis and during the translation of said modules or of said component relative to the main axis, said scanning means furthermore scan said shaft throughout its rim and its height.

8. Device according to any one of the claims 1 to 4, wherein said circular mechanical component with toothing is a toothed wheel comprising a circular hole having the main axis of rotation of said component as its axis, and wherein said at least one additional laser measurement module is oriented relative to said component so that, during the rotation of said modules or of said component around the main axis, said scanning means scan the hole throughout its surface.

9. Device according to any one of the claims 1 to 8, wherein the circular mechanical component with toothing belongs to the group comprising a component with straight toothing, a component with helical toothing, a component with herringbone toothing.

10. Device according to any one of the claims 1 to 9, wherein the measuring modules are provided with a line-type laser emitting source.
